# FASCICULE DE BREVET EUROPEEN

(11) **EP 2 010 956 B1**
(45) Date de publication et mention de la délivrance du brevet: **04.05.2011**
(21) Numéro de dépôt: 07730989.6
(22) Date de dépôt: 14.02.2007
(51) Int. Cl.: G02C 5/22, G02C 1/02, G02C 1/08

(54) **LUNETTES COMPORTANT DES BRANCHES AVEC BUTEE DE FERMETURE INTEGREE**
BRILLEN MIT BOGEN MIT INTEGRIERTEM SCHLIEßUNGSANSCHLAG
SPECTACLES COMPRISING BOWS WITH INTEGRATED CLOSURE STOP

(30) Priorité: 26.04.2006 FR 0604003
(43) Date de publication de la demande: 07.01.2009
(73) Titulaire: Logo SA, 39400 Morez (FR)
(72) Inventeur: DAMEN, Mickaël, 25000 Besançon (FR)
(74) Mandataire: Gendron, Vincent Christian
(86) Numéro de dépôt international: PCT/FR2007/000278
(87) Numéro de publication internationale: WO 2007/122302

(56) Documents cités:
- FR-A1- 2 534 702
- FR-A1- 2 751 431
- FR-A1- 2 795 529
- FR-A1- 2 803 920
- GB-A- 2 158 961

## Description

La présente invention concerne des lunettes constituées, d'une manière générale, d'une façade optique ou solaire, reliée à deux branches latérales de soutien.

De manière connue, chacune de ces branches est reliée à la façade par l'intermédiaire, d'une part de moyens de fixation issus d'un tenon relié à la façade, qu'il soit issu ou non d'une monture, c'est-à-dire qu'il pourra s'agir de lunettes dites « percées » ou « cerclées », et d'autre part par des moyens d'articulation de ladite branche par rapport au tenon.

Ces doubles moyens ont toujours posé des problèmes de réalisation, c'est pourquoi une tendance a pu être constatée vers les branches élastiques sans charnière, présentant l'avantage d'être esthétiques, confortables et légères.

Mais un inconvénient réside dans le fait que ces branches sont encombrantes et présentent une difficulté de rangement dans un étui ou une poche.

Elles perturbent donc les habitudes acquises de refermer les branches d'une paire de lunettes avant de la ranger.

Il est donc souhaité de revenir aux charnières connues précédemment, mais cela au détriment de l'esthétique du modèle.

la demande de brevet français N° 2534702 montre un dispositif combinant des moyens de fixation formant tenon à des moyens d'articulation, mais ces moyens sont agencés dans un plan horizontal et de ce fait, ne sont pas discrets mais encombrants.

Le but de la présente invention est de remédier à l'ensemble des inconvénients précités en gardant l'esthétique agréable des branches élastiques ainsi que leur confort, tout en apportant une facilité de montage et de démontage avec un système d'articulation et de fixation le plus intégré possible à la branche.

Dans ce but, la présente invention concerne des lunettes constituées d'une façade optique ou solaire, reliée à deux branches latérales de soutien, chacune d'elles étant reliée à la façade par l'intermédiaire, d'une part de moyens de fixation issus d'un tenon, relié à la façade, issu ou non d'une monture, et d'autre part de moyens d'articulation de ladite branche par rapport au tenon, caractérisées en ce que les moyens de fixation et les moyens d'articulation sont intégrés dans un même dispositif de liaison, dans l'extrémité de la branche, à proximité du tenon, pour assurer la double fonction de fixation et d'articulation, selon deux axes distincts, parallèles entre eux, dans le sens vertical. L'invention est définie par l'objet de la revendication 1.

L'invention concerne également les caractéristiques qui ressortiront au cours de la description qui va suivre.

Cette description donnée à titre d'exemple non limitatif, fera mieux comprendre comment l'invention peut être réalisée en référence aux dessins annexés sur lesquels:
La figure 1 représente, en perspective, une paire de lunettes comportant des branches selon l'invention.
La figure 2 est une vue en perspective éclatée, selon un premier mode de réalisation, de l'ensemble de la branche intégrant la fonction d'articulation et la fonction de fixation.
La figure 3 représente, en perspective et à échelle agrandie, le premier sous-ensemble A assurant la fonction d'articulation, après assemblage.
La figure 4 est une vue en perspective d'une partie supérieure d'un tenon, faisant partie intégrante du sous-ensemble A, montrant des moyens de butée de l'articulation.
La figure 5 est une vue en perspective de l'extrémité d'une branche dans laquelle est intégré un premier élément d'articulation comportant des moyens complémentaires de butée et faisant partie du sous-ensemble A.
La figure 6 est une vue en perspective et de dessous, à échelle réduite, d'un second sous-ensemble F constituant la fonction de fixation.
La figure 7 est une vue en perspective et de dessus, à échelle réduite, d'un second sous-ensemble F constituant la fonction de fixation.
La figure 8 est une vue en perspective et de dessous du premier sous-ensemble A assurant la fonction d'articulation, après mise en place sur le sous-ensemble F assurant la fonction de fixation, et avant assemblage définitif des deux parties.
La figure 9 est une vue en perspective et de dessus de l'extrémité d'une branche après assemblage des sous-ensembles A et F.
La figure 10 est une vue en perspective et de dessous, après assemblage définitif, selon la figure 9.
La figure 11 est une vue selon un premier mode de réalisation, issu des figures 1 à 10, c'est-à-dire pour des lunettes dites « percées ».
La figure 12 est une vue en perspective éclatée d'un dispositif de liaison selon une variante de réalisation de l'invention, c'est-à-dire pour des lunettes dites « cerclées » par une monture.

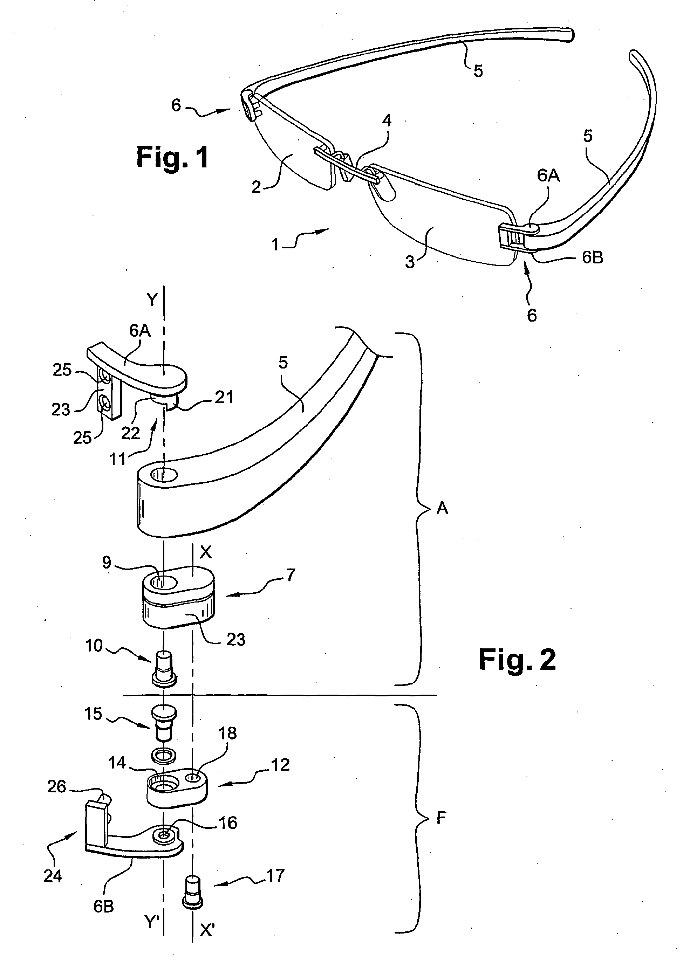

Les lunettes 1 désignées dans leur ensemble sur la figure 1 sont constituées d'une façade optique, en l'occurrence deux verres 2, 3, reliés entre eux, au centre, par un nez 4, et à leur extrémité externe, à deux branches 5, par l'intermédiaire de deux tenons 6.

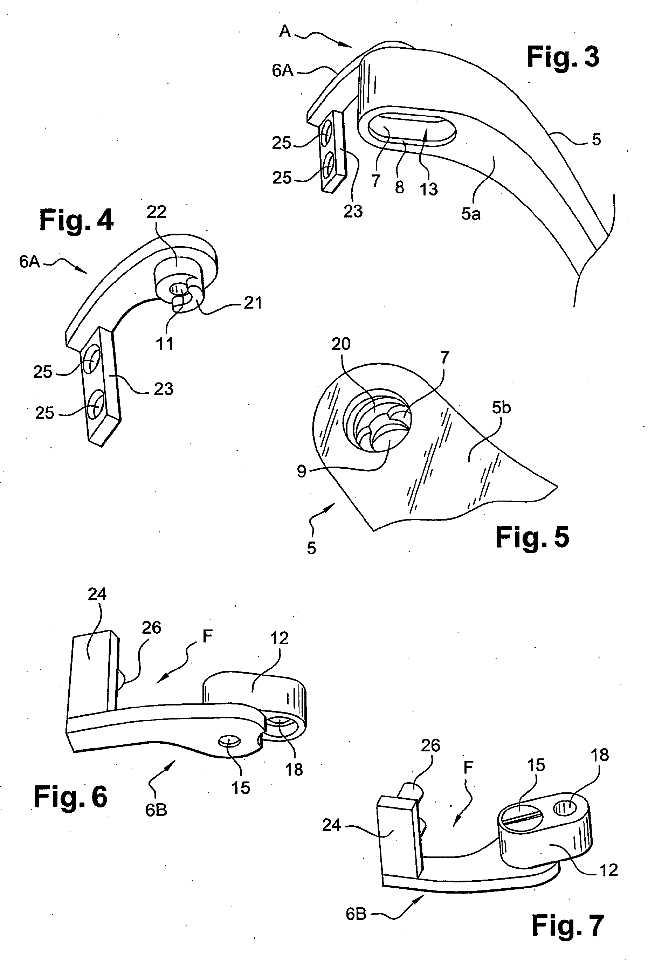

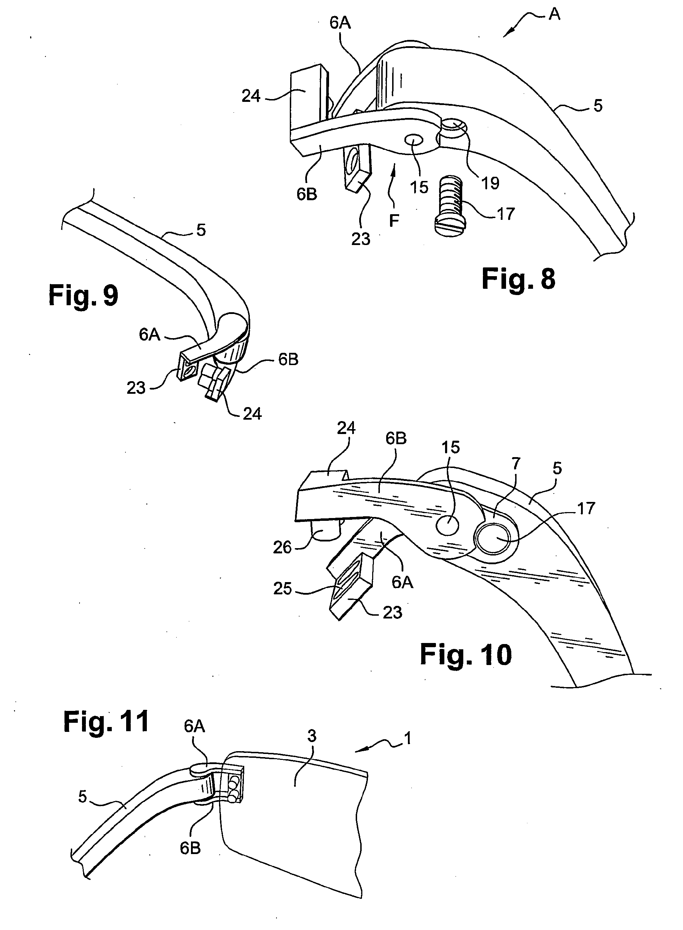

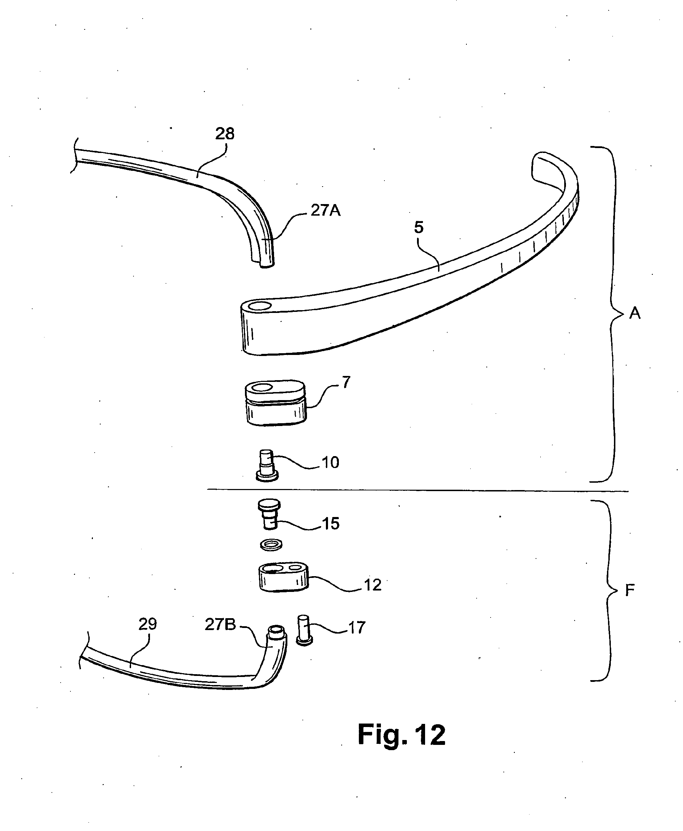

Il s'agira, selon l'exemple de réalisation des figures 1 à 11, de lunettes dites « percées », c'est-à-dire sans monture. Mais bien entendu, comme nous le verrons plus loin à la figure 12, il pourra également s'agir de lunettes « cerclées », donc avec monture.

Les lunettes, d'une manière générale, comportent d'une part des moyens de fixation issus du tenon 6, relié à la façade 2, 3, et d'autre part des moyens d'articulation de ladite branche 5 par rapport au tenon 6.

Selon une définition générale de l'invention, les moyens de fixation F et les moyens d'articulation A sont intégrés dans un même dispositif de liaison, dans l'extrémité de la branche 5, à proximité du tenon 6, pour assurer la double fonction de fixation F et d'articulation A, selon deux axes distincts XX' et YY', parallèles entre eux, dans le sens vertical.

D'une manière commune aux deux modes de réalisation représentés sur les figures 1 à 11 pour des lunettes dites « percées », et celui de la figure 12 pour des lunettes dites « cerclées », le dispositif de liaison est constitué par :
- un premier élément 7, assurant la fonction d'articulation A, encastré dans un logement 8 partiellement borgne, réalisé dans l'extrémité de la branche 5, à partir de sa face inférieure 5a, et traversé par un trou lisse 9 débouchant sur sa face supérieure 5b, sur laquelle est rapportée et mise en appui une partie supérieure 6A du tenon 6, par l'intermédiaire d'une vis 10 traversant le trou lisse 9 et se vissant dans un trou taraudé 11 de la partie supérieure 6A du tenon 6 se trouvant sur un même axe YY', l'élément d'articulation 7, la branche 5, la partie supérieure 6A du tenon 6 et la vis 10 constituant un premier sous-ensemble A ;
- un second élément 12, assurant la fonction de fixation des tenons 6 par rapport à la façade 2, 3, de forme et de dimensions sensiblement correspondantes à celles d'un logement 13 partiellement borgne réalisé à la partie inférieure de l'élément d'articulation 7, lequel second élément de fixation 12 est traversé par un premier trou lisse 14 destiné à l'engagement d'une vis 15, à l'extrémité supérieure du trou 14, et débouchant à sa partie inférieure pour se visser dans un trou taraudé 16 d'une partie inférieure 6B du tenon 6, avant la mise en place de l'élément de fixation 12 dans le logement borgne 13 de l'élément d'articulation 7 dans lequel il est retenu par l'intermédiaire d'une seconde vis 17 traversant, à partir de son extrémité inférieure, un second trou lisse 18 dudit élément de fixation 12, pour se visser dans un trou taraudé 19 de l'élément d'articulation 7, à partir de sa face inférieure, selon un second axe XX' parallèle au précédent YY', l'élément de fixation 12, la partie inférieure 6B du tenon 6 et la vis 15 constituant un second sous-ensemble F, réalisé préalablement à sa mise en place et à sa fixation dans l'élément d'articulation 7, lui-même préalablement mis en place et fixé dans la branche 5.

Selon une autre caractéristique de l'invention, le premier élément 7 assurant la fonction d'articulation A comporte, dans la partie supérieure du trou lisse 9 destiné à être traversé par la vis 10 de fixation à la partie supérieure 6A du tenon 6, un moyen de butée 20, constitué par un secteur circulaire réalisé en proéminence à l'intérieur dudit trou 9, destiné à coopérer en blocage avec un secteur complémentaire 21 réalisé en prolongement d'une douille cylindrique creuse 22, issue de la partie supérieure 6A du tenon 6, et dont au moins une partie est taraudée pour permettre le vissage de la vis d'assemblage 10 de ce premier sous-ensemble A.

Préférentiellement, mais non limitativement, le premier élément 7 assurant la fonction d'articulation A et le second élément 12 assurant la fonction de fixation F sont de forme oblongue et s'engagent dans des logements correspondants, respectivement 8 et 13, de la branche 5 et de l'élément 7.

Par ailleurs, les faces latérales du premier élément 7 assurant la fonction d'articulation comportent des cannelures d'immobilisation 23.

Selon l'exemple de réalisation représenté sur les figures 1 à 11, les parties supérieure 6A et inférieure 6B du tenon 6 sont constituées par deux bras, reliés respectivement au premier élément d'articulation 7 et au deuxième élément de fixation 12, chacun de ces bras comportant une patte de fixation 23 et 24, perpendiculaires, dirigées l'une vers l'autre, dont l'une 23 est percée de trous 25, et dont l'autre 24 comporte des canons taraudés 26 recevant des vis de fixation (non représentées) après que celles-ci aient traversé les trous 25 de la patte 23 et les verres de lunettes, dans le cas de lunettes dites « percées ».

Selon l'exemple de réalisation de la figure 12, les parties supérieure 27A et inférieure 27B du tenon 27 sont constituées par les extrémités même des portions de cercles 28 et 29 d'une monture entourant les verres et à réunir en les reliant respectivement au premier élément d'articulation 7 et au deuxième élément de fixation.

## Revendications

1. Lunettes (1) constituées d'une façade optique ou solaire (2, 3), reliée à deux branches latérales (5) de soutien, chacune d'elles étant reliée à la façade (2, 3) par l'intermédiaire, d'une part de moyens de fixation issus d'un tenon (6), relié à la façade (2, 3), issu ou non d'une monture, et d'autre part de moyens d'articulation de ladite branche (5) par rapport au tenon (6), **caractérisées en ce que** les moyens de fixation (F) et les moyens d'articulation (A) sont intégrés dans un même dispositif de liaison, dans l'extrémité de la branche (5), à proximité du tenon (6), pour assurer la double fonction de fixation (F) et d'articulation (A), selon deux axes distincts (XX' et YY'), parallèles entre eux, dans le sens vertical, ledit dispositif de liaison étant constitué par :
- un premier élément (7), assurant la fonction d'articulation (A), encastré dans un logement (8) partiellement borgne, réalisé dans l'extrémité de la branche (5), à partir de sa face inférieure (5a), et traversé par un trou lisse (9) débouchant sur sa face supérieure (5b), sur laquelle est rapportée et mise en appui une partie supérieure (6A) du tenon (6), par l'intermédiaire d'une vis (10) traversant le trou lisse (9) et se vissant dans un trou taraudé (11) de la partie supérieure (6A) du tenon (6) se trouvant sur un même axe (YY'), l'élément d'articulation (7), la branche (5), la partie supérieure (6A) du tenon (6) et la vis (10) constituant un premier sous-ensemble (A) ;
- un second élément (12), assurant la fonction de fixation des tenons (6) par rapport à la façade (2, 3), de forme et de dimensions sensiblement correspondantes à celles d'un logement (13) partiellement borgne réalisé à la partie inférieure de l'élément d'articulation (7), lequel second élément de fixation (12) est traversé par un premier trou lisse (14) destiné à l'engagement d'une vis (15), à l'extrémité supérieure du trou (14), et débouchant à sa partie inférieure pour se visser dans un trou taraudé (16) d'une partie inférieure (6B) du tenon (6), avant la mise en place de l'élément de fixation (12) dans le logement borgne (13) de l'élément d'articulation (7) dans lequel il est retenu par l'intermédiaire d'une seconde vis (17) traversant, à partir de son extrémité inférieure, un second trou lisse (18) dudit élément de fixation (12), pour se visser dans un trou taraudé (19) de l'élément d'articulation (7), à partir de sa face inférieure, selon un second axe (XX') parallèle au précédent (YY'), l'élément de fixation (12), la partie inférieure (6B) du tenon (6) et la vis (15) constituant un second sous-ensemble (F), réalisé préalablement à sa mise en place et à sa fixation dans l'élément d'articulation (7), lui-même préalablement mis en place et fixé dans la branche (5).

2. Lunettes selon la revendication 1, **caractérisées en ce que** le premier élément (7) assurant la fonction d'articulation (A) comporte, dans la partie supérieure du trou lisse (9) destiné à être traversé par la vis (10) de fixation, à la partie supérieure (6A) du tenon (6), un moyen de butée (20), constitué par un secteur circulaire réalisé en proéminence à l'intérieur dudit trou (9), destiné à coopérer en blocage avec un secteur complémentaire (21) réalisé en prolongement d'une douille cylindrique creuse (22), issue de la partie supérieure (6A) du tenon (6), et dont au moins une partie est taraudée pour permettre le vissage de la vis d'assemblage (10) de ce premier sous-ensemble (A).

3. Lunettes selon l'une des revendications 1 ou 2, **caractérisées en ce que** le premier élément (7) assurant la fonction d'articulation (A) et le second élément (12) assurant la fonction de fixation (F) sont de forme oblongue et s'engagent dans des logements correspondants, respectivement (8) et (13), de la branche (5) et de l'élément (7).

4. Lunettes selon la revendication 3, **caractérisées en ce que** les faces latérales du premier élément (7) assurant la fonction d'articulation comportent des cannelures d'immobilisation (23).

5. Lunettes selon l'une des revendications 1 à 4, **caractérisées en ce que** les parties supérieure (6A) et inférieure (6B) du tenon (6) sont constituées par deux bras, reliés respectivement au premier élément d'articulation (7) et au deuxième élément de fixation (12), chacun de ces bras comportant une patte de fixation (23 et 24), perpendiculaires, dirigées l'une vers l'autre, dont l'une (23) est percée de trous (25), et dont l'autre (24) comporte des canons taraudés (26) recevant des vis de fixation (non représentées) après que celles-ci aient traversé les trous (25) de la patte (23) et les verres de lunettes, dans le cas de lunettes dites « percées ».

6. Lunettes selon l'une des revendications 1 à 4, **caractérisées en ce que** les parties supérieure (27A) et inférieure (27B) du tenon (27) sont constituées par les extrémités même des portions de cercles (28 et 29) d'une monture entourant les verres et à réunir en les reliant respectivement au premier élément d'articulation (7) et au deuxième élément de fixation.

## Claims

1. Spectacles (1) consisting of an optical or sunshade front (2, 3) which is connected to two supporting lateral sides (5), each of which is connected to the front (2, 3) via, on the one hand, fixing means that project from a male part (6) which is connected to the front (2, 3) and optionally projects from a frame, and, on the other hand, means for hinging said side (5) with respect to the male part (6), **characterized in that** the fixing means (F) and the hinging means (A) are integrated in a single connecting device, in the end of the side (5) and close to the male part (6), in order to provide the double function of fixing (F) and hinging (A) in two separate, parallel axes (XX' and YY') in the vertical direction, said connecting device consisting of:
- a first element (7) which provides the function of hinging (A) and is housed in a partially blind housing (8) which is made in the end of the side (5), starting from the lower face (5a) thereof, and is passed through by a plain hole (9) that opens out at the upper face (5b) thereof, an upper part (6A) of the male part (6) being connected to and pressed against said upper face (5b) by way of a screw (10) passing though the plain hole (9) and being screwed into a tapped hole (11) on one and the same axis (YY') in the upper part (6A) of the male part (6), the hinging element (7), the side (5), the upper part (6A) of the male part (6) and the screw (10) forming a first subassembly (A);
- a second element (12) which provides the function of fixing the male parts (6) to the front (2, 3) and has a form and dimensions approximately corresponding to those of a partially blind housing (13) made in the lower part of the hinging element (7), said second fixing element (12) being passed through by a first plain hole (14) into which a screw (15) is intended to be inserted at the upper end of the hole (14), said screw emerging at the lower part thereof in order to be screwed into a tapped hole (16) in a lower part (6B) of the male part (6) before the fixing element (12) is fitted into the blind housing (13) in the hinging element (7) in which it is held by a second screw (17) that passes, starting at its lower end, through a second plain hole (18) in said fixing element (12) in order to be screwed into a tapped hole (19) in the hinging element (7), starting from the lower face thereof, on a second axis (XX') parallel to the previous axis (YY'), the fixing element (12), the lower part (6B) of the male part (6) and the screw (15) forming a second subassembly (F) which is produced before it is fitted and fixed in the hinging element (7), which has itself previously been fitted and fixed in the side (5).

2. Spectacles according to Claim 1, **characterized in that** the first element (7), which provides the function of hinging (A), comprises, in the upper part of the plain hole (9) through which the fixing screw (10) is intended to pass, at the upper part (6A) of the male part (6), a stop means (20) which is formed by a circular sector that is produced in a prominent manner inside said hole (9) and is intended to come into locking engagement with a complementary sector (21) that prolongs a hollow cylindrical socket (22) that projects from the upper part (6A) of the male part (6) and at least part of which is tapped in order to enable the screw (10) for assembling this first subassembly (A) to be screwed.

3. Spectacles according to either of Claims 1 and 2, **characterized in that** the first element (7), which provides the function of hinging (A), and the second element (12), which provides the function of fixing (F), are elongate and are inserted into corresponding housings (8) and (13), respectively, in the side (5) and the element (7).

4. Spectacles according to Claim 3, **characterized in that** the lateral faces of the first element (7), which provides the function of hinging, comprise immobilizing grooves (23).

5. Spectacles according to one of Claims 1 to 4, **characterized in that** the upper part (6A) and the lower part (6B) of the male part (6) consist of two arms which are connected respectively to the first, hinging element (7) and to the second, fixing element (12), each of these arms comprising a perpendicular fixing lug (23 and 24), said lugs being directed towards one another and one (23) being pierced by holes (25) while the other (24) has tapped cylinders (26) which hold fixing screws (not shown) after the latter have passed through the holes (25) in the lug (23) and the spectacle lenses, in the case of what are known as "pierced" spectacles.

6. Spectacles according to one of Claims 1 to 4, **characterized in that** the upper part (27A) and the lower part (27B) of the male part (27) are formed by the ends even of portions of rims (28 and 29) of a frame surrounding the lenses, these portions being joined together by connecting them respectively to the first, hinging element (7) and to the second, fixing element.

## Patentansprüche

1. Brille (1) bestehend aus einer optischen oder Sonnenschutz-Fassade (2, 3), die an zwei seitlichen stützenden Bügeln (5) befestigt ist, von denen jeder an die Fassade (2, 3) mittels einerseits Befestigungsmitteln nach Art eines Zapfens (6), der an der Fassade (2, 3) angeschlossen ist und zu einem Beschlag gehören kann oder nicht, und andererseits mittels Schwenkmitteln des betreffenden Bügels (5) bezüglich des Zapfens (6) angeschlossen ist, **dadurch gekennzeichnet, dass** die Befestigungsmittel (F) und die Schwenkmittel (A) in ein und dieselbe Verbindungsvorrichtung integriert sind, und zwar in dem nächst dem Zapfen (6) gelegenen Ende des Bügels (5), um die Doppelfunktion von Befestigen (F) und Schwenken (A) in zwei unterschiedlichen, zueinander parallelen, vertikal gerichteten Achsen (XX' und YY') zu gewährleisten, bestehend aus:
- einem ersten Element (7) zum Gewährleisten der Schwenkfunktion (A), welches in einer partiell blinden Aufnahme (8) eingepasst ist, welche im Ende des Bügels (5) ausgehend von dessen Unterseite (5a) realisiert und von einem glatten Loch (9) durchsetzt ist, das an der Bügel-Oberseite (5b) mündet, auf welcher eine obere Partie (6A) des Zapfens (6) über eine Schraube (10) aufgesetzt und in Anlage gehalten ist, welche das glatte Loch (9) durchsetzt und in ein Gewindeloch (11) der oberen Partie (6A) des Zapfens (6) eingeschraubt ist, der sich auf der gleichen Achse (YY') befindet, wobei das Schwenkelement (7), der Bügel (5), die obere Partie (6A) des Zapfens (6) und die Schraube (10) eine erste Unterbaugruppe (A) bilden;
- einem zweiten Element (12), das die Funktion der Befestigung der Zapfen (6) bezüglich der Fassade (2, 3) gewährleistet, derart, dass Form und Abmessungen exakt denen einer partiell blinden Aufnahme (13) entsprechen, welche an der unteren Partie des Schwenkelementes (7) realisiert ist, wobei das besagte zweite Befestigungselement (12) von einem ersten glatten Loch (14) durchsetzt ist, das zum Zusammenwirken mit einer Schraube (15) am oberen Ende des Loches (14) bestimmt ist, und die Schraube mit ihrem unteren Ende zum Einschrauben in ein Gewindeloch (16) in einer unteren Partie (6B) des Zapfens (6) vor dem Einbringen des Befestigungselementes (12) in seine blinde Aufnahme (13) des Schwenkelementes (7) dient, in welcher es mittels einer zweiten Schraube (17) gehalten ist, welche ausgehend von ihrem unteren Ende ein zweites glattes Loch (18) des besagten Befestigungselementes (12) durchsetzt, um in ein Gewindeloch (19) des Schwenkelementes (7) ausgehend von seiner Unterseite eingeschraubt zu werden, und zwar längs einer zweiten, zu der zuerst genannten Achse (YY') parallelen Achse (XX'), wobei das Befestigungselement (12), die untere Partie (6B) des Zapfens (6) und die Schraube (15) eine zweite Unterbaugruppe (F) bilden, die vorzugsweise vor ihrer Platzierung und Befestigung im Schwenkelement (7) vor der Platzierung und der Befestigung am Bügel (5) realisiert ist.

2. Brille nach Anspruch 1, **dadurch gekennzeichnet, dass** das erste Element (7), welches die Schwenkfunktion (A) gewährleistet, in der oberen Partie des glatten Loches (9), das zum Durchlassen der Befestigungsschraube (10) zur oberen Partie (6A) des Zapfens (6) dient, ein Anschlagmittel (20) umfasst, welches einen kreisbogenförmigen, zum Inneren des besagten Loches (9) hin vorkragenden Sektor bildet, welcher zum blockierenden Zusammenwirken mit einem komplementären Sektor (21) gestaltet ist, der in Verlängerung einer hohlzylindrischen Hülse (22) ausgebildet ist und von der oberen Partie (6A) des Zapfens (6) vorsteht und von dem mindestens ein Teil mit Gewinde versehen ist, um ein Einschrauben der Schraube (10) der ersten Unterbaugruppe (A) zu ermöglichen.

3. Brille nach Anspruch 1 oder 2, **dadurch gekennzeichnet, dass** das erste Element (7) zum Gewährleisten der Schwenkfunktion (A) und das zweite Element (12) zum Gewährleisten der Befestigungsfunktion (F) längliche Form haben und in die entsprechenden Aufnahmen (8) bzw. (13) des Bügels (5) bzw. des Elements (7) sich einpassen.

4. Brille nach Anspruch 3, **dadurch gekennzeichnet, dass** die Seitenflächen des ersten, die Schwenkfunktion gewährleistenden Elementes (7) immobilisierende Riffelungen (23) tragen.

5. Brille nach einem der Ansprüche 1 bis 4, **dadurch gekennzeichnet, dass** die obere Partie (6A) bzw. die untere Partie (6B) des Zapfens (6) von zwei Armen gebildet sind, die jeweils mit dem ersten Schwenkelement (7) bzw. dem zweiten Befestigungselement (2) verbunden sind, wobei diese Arme je eine Befestigungspratze (23) bzw. (24) aufweisen, die senkrecht zueinander ausgerichtet sind, wobei die eine Pratze (23) von Löchern (25) durchsetzt ist und die andere Pratze (24) mit Gewinde versehene Buchsen (26) zur Aufnahme von Befestigungsschrauben (nicht gezeigt) aufweisen, nachdem diese die Löcher (25) der Pratze (23) und solche in den Gläsern der Brille, im Falle von "gelochten" Gläsern, durchsetzt haben.

6. Brille nach einem der Ansprüche 1 bis 4, **dadurch gekennzeichnet, dass** die obere Partie (27A) und die untere Partie (27B) des Zapfens (27) von Enden bogenförmiger Abschnitte (28 und 29) einer Fassung gebildet sind, welche die Gläser einfassen und zum Anschließen jeweils an das erste Element (7) zur Schwenkung und an das zweite Element zur Befestigung dienen.
